# EUROPÄISCHE PATENTANMELDUNG

(11) **EP 3 031 516 A1**
(43) Veröffentlichungstag der Anmeldung: **15.06.2016**
(21) Anmeldenummer: 15195321.3
(22) Anmeldetag: 19.11.2015
(51) Int. Cl.: B01D 67/00, B01D 69/02, B01D 69/12, B01D 71/56, B01D 61/02

(54) **UMKEHROSMOSE- ODER NANOFILTRATIONS-MEMBRANEN UND VERFAHREN ZU IHRER HERSTELLUNG**

(30) Priorität: 29.11.2014 DE 102014224473
(71) Anmelder: Leibniz-Institut für Polymerforschung Dresden e.V., 01069 Dresden (DE)
(72) Erfinder: MEIER-HAACK, Jochen, 01259 Dresden (DE); LANGNER, Christian, 01156 Dresden (DE); VOIT, Brigitte, 01187 Dresden (DE); ABDEL REHIM, Mona, Dokki, Cairo (EG); NIKOLAEVA, Daria, 3000 Leuven (BE)
(74) Vertreter: Rauschenbach, Marion

(57) **Zusammenfassung**

Die Erfindung bezieht sich auf das Gebiet der Polymerchemie und betrifft Umkehrosmose- oder Nanofiltrations-Membranen, wie sie beispielsweise zur Aufbereitung von Brauchwasser, zur Meerwasserentsalzung eingesetzt werden.

Die Aufgabe der vorliegenden Erfindung besteht in der Angabe von Umkehrosmose- oder Nanofiltrations-Membranen, die gute bis sehr gute Foulingeigenschaften bei aufweisen.

Die Aufgabe wird gelöst durch Umkehrosmose- oder Nanofiltrations-Membranen, bestehend aus einer Trägerschicht, auf der eine poröse Stützschicht, darauf eine trennaktive Schicht und darauf eine Deckschicht angeordnet sind, wobei die trennaktive Schicht aus Polyamid mit Säurechloridgruppen an der Oberfläche der trennaktiven Schicht besteht, und wobei die Deckschicht aus einem funktionelle Gruppen enthaltenden Polymer besteht, und die funktionellen Gruppen der Deckschicht mit den Säurechloridgruppen des Polyamides der trennaktiven Schicht chemisch reaktiv gekoppelt sind.

Die Aufgabe wird weiterhin gelöst durch ein Verfahren, bei dem auf die trennaktive Schicht aus Polyamid unmittelbar nachfolgend mindestens eine Deckschicht aufgebracht wird.

## Beschreibung

Die Erfindung bezieht sich auf das Gebiet der Polymerchemie und betrifft Umkehrosmose- oder Nanofiltrations-Membranen, wie sie beispielsweise zur Aufbereitung von Brauchwasser, zur Meerwasserentsalzung, zur Entfernung von persisten organischen Schadstoffen (POP) oder zur Konzentrationserhöhung von Säften oder Mosten eingesetzt werden und ein Verfahren zu ihrer Herstellung.

Die Nanofiltration ist ein druckgetriebenes Membranverfahren, das gelöste Moleküle, Schwermetall-Ionen und andere kleine Partikel zurückhält. Membranen die in der Nanofiltration eingesetzt werden, haben definitionsgemäß eine Porengröße von höchstens 2 nm, was sie von gröberen Membranen unterscheidet, die in der Ultrafiltration und Mikrofiltration eingesetzt werden. Zur vollständigen Trennung aller gelösten Stoffe vom Lösungsmittel ist allerdings das nächst feinere Verfahren der Umkehrosmose erforderlich. Im Vergleich zur Umkehrosmose werden bei der Nanofiltration entsprechend gröbere Filter und geringere Arbeitsdrücke verwendet. Die zur Filtration verwendeten Membranen sind allerdings meist nur eingeschränkt temperatur- oder chemikalienbeständig, so dass die Anwendung der Methode im Wesentlichen auf die Wasserbehandlung begrenzt ist.

Die Umkehrosmose oder Reversosmose ist ein physikalisches Verfahren zur Aufkonzentration von in Flüssigkeiten gelösten Stoffen, bei der mit Druck der natürliche Osmose-Prozess umgekehrt wird. Das Medium, in dem die Konzentration eines bestimmten Stoffes verringert werden soll, ist durch eine halbdurchlässige (semipermeable) Membran von dem Medium getrennt, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen.

Trinkwasser hat einen osmotischen Druck von weniger als 0,2 MPa, der angewendete Druck für die Umkehrosmose von Trinkwasser 0,3 bis 3 MPa, je nach verwendeter Membran und Anlagenkonfiguration. Für die Meerwasserentsalzung ist ein Druck von 6 bis 8 MPa erforderlich, da Meerwasser mit ca. 3 MPa einen wesentlich höheren osmotischen Druck aufweist als Trinkwasser. In einigen Anwendungen, z. B. für die Aufkonzentration von Deponiesickerwasser, werden noch höhere Drücke verwendet.

Die Umkehrosmosemembran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die "Verunreinigungsmoleküle" zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren. Das Lösungs-Diffusions-Modell beschreibt diesen Vorgang.

Verschiedene Lösungen solcher Umkehrosmose- oder Nanofiltrations-Membranen ebenso, wie verschiedene Herstellungsverfahren sind bekannt.

Eine Lösung stellen asymmetrische Kompositmembranen dar. Diese bestehen aus einem porösen Trägermaterial, in der Regel ein Vlies, einer darauf aufgebrachten porösen Stützschicht, vorzugsweise aus Polysulfon oder Polyethersulfon, und einer darauf aufgebrachten trennaktiven Schicht aus einem vernetzen aromatischen oder teilaromatischen Polyamid. Derartige Membranen weisen einen hohen Salzrückhalt (> 99%) vergleichweise hohe ,Permeabilittäen auf (3.5 l/m² h MPa). Nachteile dieser Membranen sind deren hohe Foulingneigung und hohe Empfindlichkeit gegenüber freien Chlorspezies wie Cl₂, HOCI oder OCl⁻.

Unter Fouling wird allgemein die Abnahme der Durchlässigkeit einer Membran in Folge von Ablagerungen organischer oder anorganischer Wasserinhaltsstoffe während des Betriebs verstanden und kann reversibel oder irreversibel sein. Das irreversible organische Fouling (irreversible Anbindung organischer Wasserinhaltsstoffe an die Polyamidschicht) wird durch hydrophobe Wechselwirkunge und π-π-Wechselwirkungen zwischen der Membranoberfläche und den Wasserinhaltsstoffen begünstigt.

Neben der Vorreinigung des Zulaufstroms, konstruktive Auslegung der Anlagen, Betriebsbedingungen und Reinigungsverfahren, stellen die chemischen und physikalischen Eigenschaften der Membranoberflächen einen wesentlichen Aspekt für eine Verringerung des Foulings dar.

Die Vorreinigung des Zulaufstroms beinhaltet vielfach auch eine Desinfektionsstufe, bei zumeist chlorhaltige Mittel, wie freies Chlor oder Hypochlorit, eingesetzt werden. Es ist bekannt, dass Polyamid unter Einwirkung von freiem Chlor schnell abbaut. Trotz Desaktivierung der freien Chlorspezies vor dem Kontakt mit den Umkehr- oder Nanofiltrationsmembranen besteht bei jedem Reinigungszyklus die Gefahr einer Membranschädigung.

Eine Änderung der chemischen und physikalischen Eigenschaften der Membranoberfläche zur Foulingminderung kann durch Änderung der chemischen Zusammensetzung der Polyamidschicht oder durch Oberflächenmodifizierung mit hydrophilen Polymeren erreicht werden. Die für die Modifikation eingesetzten Materialien sollten selbst möglichst inert gegenüber freien Chlorspezies sein und/oder deren Konvektion zur Polyamidschicht vermindern.

Nach S. Yu et al: J. Membr. Sci. 379 (2011) 164 und M. Liu et al: Desalination 288 (2012) 98 sind Dünnschichtmembranen bekannt, die durch Grenzphasenpolymerisation hergestellt werden und bei der als Aminkomponente ein Polyvinylamin eingesetzt worden ist.

Gemäß Y.-C. Chiang et al: J. Membr. Sci. 326 (2009) 19-26 und C. Wu et al: J. Membr. Sci. 472 (2014) 141-153 sind Dünnschichtmembranen mit einer Beschichtung aus hochverzweigtem Polyethylenimin bekannt, die ebenfalls mittels Grenzphasenpolymerisation hergestellt werden.

Nach der EP 0780152 B1 ist eine halbdurchlässige Verbundmembran und ein Verfahren zu ihrer Herstellung bekannt, die aus einem mikroporösen Substrat besteht, welches mit einer halbdurchlässigen, mikroporösen Substrat-Membran, wie eine Polysulfon-Membran, versehen ist, die auf mindestens einer Seite eine wasserdurchlässige polymere Schicht aufweist, die das Grenzflächen-Polymerisationsprodukt eines aliphatischen Amin-terminierten Dendrimers, wie ein Propylamin, und einer damit polymerisierenden Verbindung, wie ein ToluolDiisocyanat, oder ein Carbonsäurechlorid oder ein Sulfonsäurechlorid enthält. Hergestellt wird die Verbundmembran durch Grenzflächen-Polymersations-Reaktionen zwischen einem aliphatischen Amin-terminierten Dendrimer und einer damit polymerisierbaren Verbindung.

Bekannt ist auch die Einpolymerisation eines dendritischen Poly(amidamin)s (PAMAM) in die trennaktive Schicht einer Dünnschichtmembran (L. Li et al: J. Membr. Sci. 269 (2006) 84).

Bekanntermaßen verbleiben bei der Grenzphasenpolymerisation Säurechloridgruppen mindestens an der Oberfläche der Polyamidschicht. Nach Kang et al: Polymer 48 (2007) 1165 ist die Modifizierung der Polyamidoberfläche durch chemische Anbindung eines Amin-terminierten Polyethylenglykol-monomethylethers durch eine chemische Reaktion der Amingruppen mit den Säurechloridgruppen bekannt. Hierzu wurde die Säurechloridlösung nach der Grenzphasenpolymerisation entfernt und die Membran mit einer wässrigen Lösung des Amin-terminierten Polyethylenglykol-monomethylethers bedeckt. Die Antifoulingwirkung wurde durch Filtrationsversuche mit einer Dodecyltrimethylammoniumbromidlösung und einer wässrigen Tanninlösung gezeigt. Es wurden jedoch keine Werte für Permeatfluss und Salzrückhalt angegeben.

Nach Zou et al: Sep. Pur. Technol. 72 (2010) 256 werden die an der Oberfläche der Polyamidschicht befindlichen Säurechloridgruppen mit m-Phenylendiamin zur Reaktion gebracht. Hierzu wurde nach der Grenflächenpolymerisation die Säurechloridlösung entfernt und die Oberfläche mit einer wässrigen Lösung des Diamins in Kontakt gebracht. In einem weiteren Schritt wird die Membranoberfläche nach Entfernung der Diaminlösung wiederum mit einer Säurechloridlösung kontaktiert. Die bei diesem Verfahrensschritt an der Oberfläche entstandenen Säurechloridgruppen werden nach Entfernung der Säurechloridlösung mit einer wässrigen Diaminlösung bedeckt. Eine derartige "Mehrschichtmembran" zeigte im Vergleich zu einer "Einschichtmembran" einen leicht verbesserten Permeatfluss und einen leicht erhöhten Salzrückhalt. Filtrationsversuche mit einer Dodecyltrimethylammoniumbromidlösung und einer wässrigen Huminsäurelösung zeigen eine verringerte Foulingneigung der "Multischichtmembranen" im Vergleich zur "Einschichtmembran".

Aus der US 6,177,011 B1 ist eine Umkehrosmose- oder Nanofiltrations-Membran aus einem Trägermaterial mit einer Schicht aus Polyamid und einer nachträglich darauf aufgebrachten Separationsschicht aus Polyvinylalkohol bekannt, die ein hohes Salzrückhaltevermögen, eine hohe Wasserpermeabilität und eine hohe Foulingresistenz aufweist.

Gemäß I.-C. Kim et al: J. Ind. Eng. Chem. 10 (2004) 115, sind Nanofiltrations-Umkehrosmosemembranen bekannt, die nachträglich mit Polyvinylalkohol modifiziert wurden. Zur Fixierung wurde der Polyvinylalkohol mit Glutaraldehyd vernetzt. Die Modifizierung ergab eine Reduktion der Permeablilität und eine Erhöhung der Salzrückhaltung bei der Nanofiltrationsmembran während bei der Umkehrosmosemembran der umgekehrte Effekt beobachtet wurde.

Unter Fouling wird in der Membrantechnik die Verschmutzung von Filtermembranen verstanden. Bei der Ultra- und Mikrofiltration wird der Filtrationsprozess sehr stark durch die Filterkuchenbildung (Deckschichtbildung) beeinflusst. Durch diese Filterkuchenbildung wird der Filtrationseffekt stark beeinträchtigt.

Nachteilig bei allen bekannten Lösungen ist, dass die jeweiligen Foulingeigenschaften allein oder in Kombination mit einer gewünschten Wasserpermeabilität noch unzureichend sind.

Die Aufgabe der vorliegenden Erfindung besteht in der Angabe von Umkehrosmose- oder Nanofiltrations-Membranen, die gute bis sehr gute Foulingeigenschaften bei gutem bis sehr gutem Rückhaltevermögen von gelösten Stoffen und insbesondere von Salzen aufweisen, und in der Angabe eines einfachen und kostengünstigen Verfahren zu ihrer Herstellung.

Die Aufgabe wird durch die in den Ansprüchen angegebene Erfindung gelöst. Vorteilhafte Ausgestaltungen sind Gegenstand der Unteransprüche.

Die erfindungsgemäße Umkehrosmose- oder Nanofiltrations-Membranen bestehen aus mindestens einer Trägerschicht, auf der mindestens eine poröse Stützschicht, darauf mindestens eine trennaktive Schicht und darauf wiederum mindestens eine Deckschicht angeordnet sind, wobei die trennaktive Schicht aus mittels Grenzphasenpolymerisation aufgebrachtem Polyamid mit Säurechloridgruppen mindestens an der Oberfläche der trennaktiven Schicht besteht, und wobei die Deckschicht aus mindestens einem funktionelle Gruppen enthaltenden Polymer besteht, und die funktionellen Gruppen der Deckschicht mit den Säurechloridgruppen des Polyamides der trennaktiven Schicht chemisch reaktiv gekoppelt sind.

Vorteilhafterweise ist die Trägerschicht ein textiles Flächengebilde, noch vorteilhafterweise ein Vlies.

Ebenfalls vorteilhafterweise besteht die poröse Stützschicht aus Polysulfon oder Polyethersulfon.

Weiterhin vorteilhafterweise besteht die Decksicht aus mindestens einem funktionelle Gruppen enthaltenden Polymer, welches wasserlöslich und/oder alkohollöslich und/oder in einer Wasser-Alkohol-Mischung löslich ist.

Und auch vorteilhafterweise besteht die Deckschicht aus mindestens einem funktionelle Gruppen enthaltenden hochverzweigten Polymer.

Vorteilhaft ist es auch, wenn die Deckschicht aus Polyethylenimin und/oder Polypropylenimin und/oder Poly(amidamin) und/oder Polyamin und/oder Polyetherol und/oder Polyol und/oder Polysaccarid und/oder Chitosan besteht.

Und auch vorteilhaft ist es, wenn die Polymere der Deckschicht als funktionelle Gruppen primäre und/oder sekundäre Aminogruppen oder Hydroxylgruppen aufweisen.

Bei dem erfindungsgemäßen Verfahren zur Herstellung von Umkehrosmose- oder Nanofiltrations-Membranen wird auf eine Trägerschicht mindestens eine poröse Stützschicht aufgebracht, auf die nachfolgend mindestens eine trennaktive Schicht aus Polyamid mittels Grenzphasenpolymerisation aufgebracht wird und darauf wiederum unmittelbar nachfolgend wird mindestens eine Deckschicht aus mindestens einem funktionelle Gruppen enthaltenden Polymer aufgebracht.

Vorteilhafterweise wird die Deckschicht unmittelbar nach der Grenzflächenpolymerisation der trennaktiven Schicht in Form einer wässrigen Lösung und/oder einer alkoholischen Lösung und/oder einer Lösung in einer Wasser-Alkohol-Mischung durch ein Sprühverfahren oder durch ein Rakelverfahren oder durch ein Tauchverfahren auf die trennaktive Schicht aufgebracht, noch vorteilhafterweise durch ein Sprühverfahren.

Ebenfalls vorteilhafterweise wird die Deckschicht als wässrige Lösung aufgebracht.

Weiterhin vorteilhafterweise werden die funktionelle Gruppen enthaltenden Polymere in der wässrigen Lösung und/oder der alkoholischen Lösung und/oder der Lösung in einer Wasser-Alkohol-Mischung in einer Konzentration zwischen 5 und 30 Ma.-%, vorteilhafterweise zwischen 10 und 20 Ma.-%, eingesetzt.

Mit der erfindungsgemäßen Lösung wird es erstmals möglich, Umkehrosmose- oder Nanofiltrations-Membranen anzugeben, die gute bis sehr gute Foulingeigenschaften bei gutem bis sehr gutem Rückhaltevermögen von gelösten Stoffen und insbesondere von Salzen aufweisen. Solche Membranen können erfindungsgemäß mit einem einfachen und kostengünstigen Verfahren hergestellt werden.

Erreicht wird dies durch Umkehrosmose- oder Nanofiltrations-Membranen, die aus mindestens einer Trägerschicht besteht. Diese Trägerschicht ist ein textiles Flächengebilde, wie vorteilhafterweise ein Vlies. Auf diese Trägerschicht ist mindestens eine poröse Stützschicht aufgebracht. Diese Stützschicht besteht vorteilhaftweise aus Polysulfon oder Polyethersulfon. Darauf wiederum ist mindestens eine trennaktive Schicht aus mittels Grenzphasenpolymerisation aufgebrachtem Polyamid mit Säurechloridgruppen, die mindestens an der Oberfläche der trennaktiven Schicht angeordnet sind, vorhanden. Abschließend befindet sich auf der trennaktiven Schicht mindestens eine Deckschicht, wobei die Deckschicht aus mindestens einem funktionelle Gruppen enthaltenden Polymer besteht.
Vorteilhafterweise werden alle Schichten ganzflächig übereinander angeordnet.

Erfindungswesentlich ist, dass dabei die funktionellen Gruppen der Deckschicht mit den Säurechloridgruppen des Polyamides der trennaktiven Schicht chemisch reaktiv gekoppelt sind. Um diese reaktive Kopplung mit den Säurechloridgruppen des Polyamides realisieren zu können, müssen diese als Kopplungspartner noch vorhanden sein. Daher ist es erfindungswesentlich, dass nach dem Aufbringen mindestens einer porösen Stützschicht auf die Trägerschicht und den nachfolgenden Aufbringen mindestens einer trennaktiven Schicht aus Polyamid mittels Grenzphasenpolymerisation auf die Stützschicht die Deckschicht auf die trennaktive Schicht unmittelbar nachfolgend nach dem Aufbringen der trennaktiven Schicht realisiert wird.

Die funktionelle Gruppen enthaltenden Polymere der Deckschicht sind vorteilhafterweise wasserlöslich und/oder alkohollöslich und/oder in einer Wasser-Alkohol-Mischung löslich und können so unmittelbar nach dem Aufbringen der trennaktiven Schicht mittels Grenzflächenpolymerisation in Form einer wässrigen Lösung und/oder einer alkoholischen Lösung und/oder einer Lösung in einer Wasser-Alkohol-Mischung auf die trennaktive Schicht aufgebracht werden.

Vorteilhafterweise erfolgt die Aufbringung der Deckschicht als wässrige Lösung der Polymere mit funktionellen Gruppen.

Im Falle einer Lösung der Polymere mit funktionellen Gruppen liegen die Polymere in dem Lösungsmittel in einer Konzentration zwischen 5 und 30 Ma.-%, vorteilhafterweise zwischen 10 und 20 Ma.-%, vor.

Das Aufbringen der Deckschicht erfolgt wiederum vorteilhafterweise mittels eines Sprühverfahrens oder durch ein Tauchverfahren oder durch Rakelverfahren. Vorteilhafter ist es, wenn die Deckschicht durch Sprühen aufgebracht wird, da die trennaktive Schicht zu diesem Zeitpunkt mechanisch sehr unstabil ist und eine Beschädigung oder gar Entfernung der trennaktiven Schicht vermieden werden muss.

Als Polymere für die Deckschicht können vorteilhafterweise funktionelle Gruppen enthaltende hochverzweigte Polymere, aber auch beispielsweise Polyethylenimin und/oder Polypropylenimin und/oder Poly(amidamin) und/oder Polyamin und/oder Polyetherol und/oder Polyol und/oder Polysaccarid und/oder Chitosan vorhanden sein.
Die Polymere der Deckschicht weisen vorteilhafterweise als funktionelle Gruppen primäre und/oder sekundäre Aminogruppen oder Hydroxylgruppen auf. Es können aber auch Spacergruppen zwischen den Säurechloridgruppen und den funktionellen Gruppen der Polymere der Deckschicht angeordnet sein, so dass nicht unbedingt eine direkte kovalente Kopplung der trennaktiven Schicht mit der Deckschicht über chemische Reaktionen vorliegen muss, sondern auch eine indirekte kovalente Kopplung. Dadurch ist eine größere Anzahl an Möglichkeiten für die Ankopplung von Polymeren mit funktionellen Gruppen gegeben.

Mit der erfindungsgemäßen Lösung werden Umkehrosmose- oder Nanofiltrations-Membranen zur Verfügung gestellt, die eine geringe Foulingneigung und eine hohe Chlorrestistenz aufweisen, ohne dass ihre Filtrationseigenschaften, wie Permeabilität und Salzrückhalt, negativ beeinflusst werden.
Erfindungsgemäß wird dies erreicht durch die Beschichtung der trennaktiven Schicht mit einer hydrophilen multifunktionellen Schicht, aus einem, vorzugsweise hochverzweigten, Polymer mit funktionellen Gruppen, die mit den mindestens auf der Oberfläche der trennaktiven Schicht aus Polyamid vorhandenen Säurechloridgruppen eine reaktive Kopplung eingehen. Durch die kovalente Bindung der Gruppen wird eine langzeitstabile Ankopplung der Deckschicht an die trennaktive Schicht ermöglicht.
Die erfindungsgemäße Deckschicht ist eine hydrophile multifunktionelle Hydrogelschicht, durch die die Hydrophilie der Membranoberfläche erhöht und deren Rauigkeit gesenkt wird. Durch diese erhöhte Hydrophilie der Membranoberfläche wird quasi eine ähnliche oder gleiche Hydrophilie wie Wasser erreicht, so dass die Neigung zum Fouling der gelösten Stoffe auf der Membran gering ist und somit die vorteilhaften Eigenschaften der erfindungsgemäßen Membran erreicht werden.

Nachfolgende wird die Erfindung an einem Ausführungsbeispiel näher erläutert.

### Beispiel 1 (Vergleichsbeispiel)

Eine Umkehrosmose- oder Nanofiltrations-Membran wird aus einer Stützmembran, bestehend aus einem Vlies und einer darauf aufgebrachten porösen Polyethersulfonschicht mit den Abmessungen 85,2 cm² hergestellt, indem die Stützmembran in eine Lösung aus m-Phenylendiamin in Wasser (Konzentration: 20g/l) getaucht wird. Die überschüssige Flüssigkeit wird mit einer Walze entfernt. Danach wird die getränkte Stützmembran in einen Rahmen eingespannt, wobei die Polyethersulfonoberfläche nach oben zeigt, und eine Säurechloridlösung aus 1 g/l Trimesoylchlorid (TMC) in einem Hexan/Tetrahydrofuran (THF)-Gemisch mit 0,5 % THF auf die Polyethersulfonoberfläche aufgegossen wird. Dies bildet die trennaktive Schicht. Nach 180 s wird die überschüssige Säurechloridlösung durch dekantieren entfernt. Die getränkte und beschichtete Stützmembran wird dann 30 s bei Raumtemperatur und 120 s bei 80 °C getrocknet.
Die so hergestellte Umkehrosmose- oder Nanofiltrations-Membran wird dann mit voll entsalztem (VE) Wasser 2 h, nachfolgend mit 1 mM Salzsäure mit einem pH-Wert von 3 20 h und dann wiederum mit VE Wasser 2 h gewaschen, um die verbliebenen Monomere zu entfernen.

Diese Membran wurde in eine Filtrationszelle eingebaut und mit einer wässrigen Lösung von 3,5 g/l Natriumchlorid mit einem Druck von 5 MPa und einer Überströmungsgeschwindigkeit 90 kg/h beaufschlagt und 16 h belassen.
Die Permeabilität der Membran betrug 7,1 l/m²hMPa und der Salzrückhalt 98,2 %.

### Beispiel 2

Eine Umkehrosmose- oder Nanofiltrations-Membran wird aus einer Stützmembran, bestehend aus einem Vlies und einer darauf aufgebrachten porösen Polyethersulfonschicht mit den Abmessungen 85,2 cm² hergestellt, indem die Stützmembran in eine Lösung aus m-Phenylendiamin in Wasser (Konzentration: 20g/l) getaucht wird.. Die überschüssige Flüssigkeit wird mit einer Walze entfernt. Danach wird die getränkte Stützmembran in einen Rahmen eingespannt, wobei die Polyethersulfonschicht nach oben zeigt, und eine Säurechloridlösung aus 1 g/l Trimesoylchlorid (TMC) in einem Hexan/Tetrahydrofuran (THF)-Gemisch mit 0,5 % THF auf die Oberfläche gegossen wird. Dies bildet die trennaktive Schicht. Nach 180 s wird die überschüssige Säurechloridlösung durch dekantieren entfernt.
Danach wird sofort eine Lösung von 10 Ma.-% Poly(amidamin) (PAMAM) in Wasser auf die Oberfläche der trennaktiven Schicht als Deckschicht gesprüht. Nach weiteren 180 s wird die Membran dann 120 s bei 80 °C getrocknet.
Die so hergestellte Umkehrosmose- oder Nanofiltrations-Membran wird dann mit 1mM Salzsäure mit einem pH 3 20 h und dann mit VE Wasser 2 h gewaschen, um die verbliebenen Monomere zu entfernen.

Diese Membran wurde in eine Filtrationszelle eingebaut und mit einer wässrigen Lösung von 3,5 g/l Natriumchlorid mit einem Druck von 5 MPa und einer Überströmungsgeschwindigkeit 90 kg/h beaufschlagt und 16 h belassen.
Die Permeabilität der Membran betrug 8,5 l/m²hMPa und der Salzrückhalt 98,2 %.

Zur Überprüfung der Foulingneigung der Membranen wurde der Wasserfluss vor und nach der Filtration einer Proteinlösung mit 1 g/l Rinderserumalbumin (BSA) bei pH7 ausgesetzt. Die Membran mit der Deckschicht aus Beispiel 2 zeigte gegenüber der Membran nach Beispiel 1 (Vergleichsbeispiel ohne Deckschicht) eine deutlich verringerte Foulingneigung. Der zeitliche Permeatflussabfall während der Proteinfiltration der mit einer Deckschicht modifizierten Membran aus Beispiel 2 ist um 75% geringer als der der unmodifizierten Membran aus Beispiel 2.

Die Testung der Chlorresistenz der Membranen aus Beispiel 1 und Beispiel 2 erfolgte durch Filtration mit Calciumhypochloritlösung (500 ppm Hypochlorit) bei pH 7 und einem Druck von 5 MPa. Die Standzeit der mit einer Deckschicht modifizierten Membran von 1250 ppm/h auf 2500 ppm/h um den Faktor 2 (zwei) erhöht werden.

## Patentansprüche

1. Umkehrosmose- oder Nanofiltrations-Membranen, bestehend aus mindestens einer Trägerschicht, auf der mindestens eine poröse Stützschicht, darauf mindestens eine trennaktive Schicht und darauf wiederum mindestens eine Deckschicht angeordnet sind, wobei die trennaktive Schicht aus mittels Grenzphasenpolymerisation aufgebrachtem Polyamid mit Säurechloridgruppen mindestens an der Oberfläche der trennaktiven Schicht besteht, und wobei die Deckschicht aus mindestens einem funktionelle Gruppen enthaltenden Polymer besteht, und die funktionellen Gruppen der Deckschicht mit den Säurechloridgruppen des Polyamides der trennaktiven Schicht chemisch reaktiv gekoppelt sind.

2. Umkehrosmose- oder Nanofiltrations-Membranen nach Anspruch 1, bei denen die Trägerschicht ein textiles Flächengebilde, vorteilhafterweise ein Vlies, ist.

3. Umkehrosmose- oder Nanofiltrations-Membranen nach Anspruch 1, bei denen die poröse Stützschicht aus Polysulfon oder Polyethersulfon besteht.

4. Umkehrosmose- oder Nanofiltrations-Membranen nach Anspruch 1, bei denen die Decksicht aus mindestens einem funktionelle Gruppen enthaltenden Polymer besteht, welches wasserlöslich und/oder alkohollöslich und/oder in einer Wasser-Alkohol-Mischung löslich ist.

5. Umkehrosmose- oder Nanofiltrations-Membranen nach Anspruch 1, bei denen die Deckschicht aus mindestens einem funktionelle Gruppen enthaltenden hochverzweigten Polymer besteht.

6. Umkehrosmose- oder Nanofiltrations-Membranen nach Anspruch 1, bei denen die Deckschicht aus Polyethylenimin und/oder Polypropylenimin und/oder Poly(amidamin) und/oder Polyamin und/oder Polyetherol und/oder Polyol und/oder Polysaccarid und/oder Chitosan besteht.

7. Umkehrosmose- oder Nanofiltrations-Membranen nach Anspruch 1, bei denen die Polymere der Deckschicht als funktionelle Gruppen primäre und/oder sekundäre Aminogruppen oder Hydroxylgruppen aufweisen.

8. Verfahren zur Herstellung von Umkehrosmose- oder Nanofiltrations-Membranen, bei dem auf eine Trägerschicht mindestens eine poröse Stützschicht aufgebracht wird, auf die nachfolgend mindestens eine trennaktive Schicht aus Polyamid mittels Grenzphasenpolymerisation aufgebracht wird und darauf wiederum unmittelbar nachfolgend mindestens eine Deckschicht aus mindestens einem funktionelle Gruppen enthaltenden Polymer aufgebracht wird.

9. Verfahren nach Anspruch 8, bei dem die Deckschicht unmittelbar nach der Grenzflächenpolymerisation der trennaktiven Schicht in Form einer wässrigen Lösung und/oder einer alkoholischen Lösung und/oder einer Lösung in einer Wasser-Alkohol-Mischung durch ein Sprühverfahren oder durch ein Rakelverfahren oder durch ein Tauchverfahren auf die trennaktive Schicht aufgebracht wird.

10. Verfahren nach Anspruch 9, bei dem die Deckschicht unmittelbar nach der Grenzflächenpolymerisation der trennaktiven Schicht in Form einer wässrigen Lösung und/oder einer alkoholischen Lösung und/oder einer Lösung in einer Wasser-Alkohol-Mischung durch ein Sprühverfahren auf die trennaktive Schicht aufgebracht wird.

11. Verfahren nach Anspruch 8, bei dem die Deckschicht als wässrige Lösung aufgebracht wird.

12. Verfahren nach Anspruch 8, bei dem die funktionelle Gruppen enthaltenden Polymere in der wässrigen Lösung und/oder der alkoholischen Lösung und/oder der Lösung in einer Wasser-Alkohol-Mischung in einer Konzentration zwischen 5 und 30 Ma.-%, vorteilhafterweise zwischen 10 und 20 Ma.-%, eingesetzt werden.
